# EUROPÄISCHE PATENTANMELDUNG

(11) **EP 4 177 198 A1**
(43) Veröffentlichungstag der Anmeldung: **10.05.2023**
(21) Anmeldenummer: 21206580.9
(22) Anmeldetag: 04.11.2021
(51) Int. Cl.: B65H 54/71, B26D 5/08, H01F 7/16

(54) **ELEKTROMAGNETISCHER ANTRIEB FÜR EINE SCHNEIDVORRICHTUNG EINER TEXTILMASCHINE, SCHNEIDVORRICHTUNG UND GARNREINIGER**

(71) Anmelder: Saurer Intelligent Technology AG, 9320 Arbon Thurgau (CH)
(72) Erfinder: Dumoulin, Charles Leopold Elisabeth, 9436 Balgach (CH)
(74) Vertreter: Morgenthum-Neurode, Mirko

(57) **Zusammenfassung**

Die Erfindung betrifft einen elektromagnetischen Antrieb (1) für eine Schneidvorrichtung einer Textilmaschine zum Durchtrennen eines Fadens, eine Schneidvorrichtung mit einem elektromagnetischen Antrieb (1) sowie einen Garnreiniger mit einer Schneidvorrichtung. Um einen elektromagnetischen Antrieb (1) für eine Schneidvorrichtung einer Textilmaschine zum Durchtrennen eines Fadens bereitzustellen, der einen besonders effizienten, schnellen, und/oder präzisen Betrieb einer Schneidvorrichtung mit einem Schneidmesser (14) mit hoher Schneidkraft ermöglicht und weiter bevorzugt eine besonders lange unterbrechungs- und wartungsfreie Betriebszeit ermöglicht, ist vorgesehen, dass der Kolben (3) abschnittsweise in einem von dem Solenoid umfassten Kernrohr (9) geführt ist, wobei das Kernrohr (9) durch das relativ zum Kolben (3) stationär angeordnete Bauteil ausgebildet ist, und wobei sich der axiale Luftspalt (6) zwischen der Stirnfläche (7) des Kolbens (3) und einer durch die Gegenfläche ausgeformten Stirnfläche (8) des Kernrohrs (9) erstreckt, und/oder der Kolben (3) wenigstens abschnittsweise hohl ausgebildet ist, und/oder der Kolben (3) in Wirkverbindung mit einem Rückstellelement (12) zur Rückstellung des aus der Ruhestellung verschobenen Kolbens (3) steht, wobei das Rückstellelement (12) eine progressive und insbesondere nicht lineare Federkennlinie aufweist, und/oder der Kolben (3) von einem relativ zum Kolben (3) stationär angeordneten Solenoidkern (5) umgeben ist, das entweder durch Puder-Spritzgießen hergestellt und/oder aus einem Weichferrit ausgebildet oder aus mehreren Lagen eines Elektrobleches, insbesondere aus einem Motorblech, ausgebildet ist.

## Beschreibung

Die Erfindung betrifft einen elektromagnetischen Antrieb für eine Schneidvorrichtung einer Textilmaschine zum Durchtrennen eines Fadens, eine Schneidvorrichtung mit einem solchen elektromagnetischen Antrieb sowie einen Garnreiniger mit einer solchen Schneidvorrichtung.

Schneidvorrichtungen mit einem elektromagnetischen Antrieb für eine Textilmaschine sowie Garnreiniger mit einer entsprechenden Schneidvorrichtung für eine Arbeitsstelle einer Textilmaschine sind in vielfältiger Ausgestaltung aus dem Stand der Technik bekannt und werden gängig zum Schneiden eines Fadens, beispielsweise bei der Erkennung eines Garnfehlers bzw. Garndefekts, verwendet.

Bei Textilmaschinen mit hohen Fadenlaufgeschwindigkeiten ist der Faden sehr schnell zu durchtrennen. Ein typischer Zyklus einer Schneidvorrichtung bzw. eines elektromagnetischen Antriebs zum Verlagern eines Schneidmessers aus einer Ruhestellung in eine Schneidstellung und zurück in die Ruhestellung erfolgt dabei bevorzugt in weniger als 15 ms. Zusätzlich zur geforderten hohen Geschwindigkeit des Schneidmessers und der kurzen Dauer des Schneidvorgangs ist es zudem erforderlich, dass das Schneidmesser eine ausreichend große Schneidkraft zum ordnungsgemäßen Durchtrennen des Fadens aufweist und der Schneidvorgang sauber und gezielt erfolgt.

Auflaufspulen herstellende Textilmaschinen, wie beispielsweise Rotorspinnmaschinen, Luftspinnmaschinen und Spulmaschinen, sind in der Lage, eine Vielzahl von Garnen mit unterschiedlichster Dicke und Materialien aufzuspulen. Die Schneidvorrichtung muss dabei sowohl dünne Garnmaterialien bspw. mit einem Durchmesser von 0.05 mm als auch dicke Garnmaterialien bspw. mit einem Durchmesser von 1 mm sauber durchtrennen können. Das Spektrum der verarbeitbaren Materialien variiert von natürlichen Fasern bis zu künstlichen Fasern. Insbesondere künstliche Fasern können dabei sehr zäh und damit schwierig zu durchtrennen sein.

Bekannte Schneidvorrichtungen aus dem Stand der Technik haben einen hohen elektrischen Energieverbrauch von Teils über 400 W bis 500 W bei nur mässiger Schnittleistung für Garne, insbesondere aus künstlichen Fasern. Dies führt insbesondere dann zu Verarbeitungsproblemen, wenn Dickstellen geschnitten werden müssen.

Es ist eine Aufgabe der vorliegenden Erfindung, den möglichen Bereich an Durchmessern und Materialien, welche durch die Schneidvorrichtung geschnitten werden kann, dauerhaft zu erweitern. Dabei ist bevorzugt der wirtschaftliche Nutzen zu berücksichtigen, welcher bei einer solchen Schneidvorrichtung durch Senkung nicht nur der Produktionskosten, sondern auch der Betriebskosten erreicht werden kann. Weiterhin bevorzugt ist zur weiteren Senkung der Betriebskosten, eine Verlängerung des Wartungs- und Serviceintervalls der Schneidvorrichtung zu erreichen. Des Weiteren ist vorzugsweise zur Steigerung der Schnittleistung bei gleichzeitiger Reduktion der Betriebskosten die Effizienz der Energiewandlung von elektrischer Energie zu Schneidenergie zu steigern. Zusätzlich soll in bevorzugter Weise die Schneidvorrichtung Bauraum reduzierend bereitgestellt werden können, um die geometrischen Bedingungen des Einbauvolumens in verbesserter Weise genügen zu können. Diese Aufgaben zusammengefasst kann es vorzugsweise als eine weitere Aufgabe der vorliegenden Erfindung angesehen werden, eine dauerhafte, exzellente Schneidleistung bei reduzierten Betriebs- und Produktionskosten sowie reduziertem Bauraum zur Verfügung zu stellen.

Die Aufgabe der vorliegenden Aufgabe wird durch einen elektromagnetischen Antrieb für eine Schneidvorrichtung einer Textilmaschine zum Durchtrennen eines Fadens nach Anspruch 1, eine Schneidvorrichtung mit einem elektromagnetischen Antrieb nach Anspruch 12 sowie einen Garnreiniger mit einer Schneidvorrichtung nach Anspruch 13 gelöst. Vorteilhafte Weiterbildungen der Erfindung sind in den abhängigen Ansprüchen angegeben.

Der erfindungsgemäße elektromagnetische Antrieb für eine Schneidvorrichtung einer Textilmaschine zum Durchtrennen eines Fadens weist einen Solenoid mit einem, innerhalb des Solenoids linear verschieblichen Kolben zum Antrieb eines Schneidmesserträgers auf, wobei der Kolben zwischen einer Ruhestellung und einer Arbeitsstellung, welche unterschiedlich zu der Ruhestellung ist, linear verschieblich ist. Der Solenoid umfasst ferner eine Spule zum Erzeugen eines den Kolben antreibenden Magnetfeldes. Zwischen einer Stirnfläche des Kolbens und einer Gegenfläche eines relativ zum Kolben stationär angeordneten Bauteils des Solenoids ist ein axialer Luftspalt, welcher in Abhängigkeit der Kolbenverschiebung veränderlich ist. Mit anderen Worten ist in der Ruhestellung des Kolbens die Stirnfläche des Kolbens zu der Gegenfläche beabstandet angeordnet, wobei dieser entlang der Verschiebungsrichtung vorherrschende axiale Abstand durch Verschiebung des Kolbens in Richtung der Gegenfläche, also in axialer Richtung, veränderlich ist.

Das Solenoid, der Elektromagnet des Solenoids und insbesondere die Spule des Solenoids können grundsätzlich in beliebiger Weise mit Leistung versorgt werden, wobei eine unmittelbare Leistungsversorgung mittels eines geladenen Kondensators bevorzugt wird. Dabei ist der Kondensator bevorzugt im Bereich einer den elektromagnetischen Antrieb umfassenden Schneidvorrichtung und/oder einer Steuereinheit der Schneidvorrichtung angeordnet.

Die vorliegende Erfindung zeichnet sich nach einem ersten Aspekt dadurch aus, dass der Kolben abschnittsweise in einem von dem Solenoid umfassten Kernrohr geführt ist, wobei das Kernrohr durch das relativ zum Kolben stationär angeordnete Bauteil ausgebildet ist. Der axiale Luftspalt erstreckt sich dabei zwischen der Stirnfläche des Kolbens und einer durch die Gegenfläche ausgeformten Stirnfläche des Kernrohrs. Wenigstens die Stirnfläche des Kolbens oder die Stirnfläche des Kernrohrs ist konisch ausgebildet. Weiter bevorzugt sind die Stirnfläche des Kolbens und die Stirnfläche des Kernrohrs korrespondierend zueinander ausgebildet. Besonders bevorzugt ist die Stirnfläche des Kolbens konisch und die Stirnfläche des Kernrohrs dazu korrespondierend ausgebildet. Unter einer korrespondieren Ausbildung ist hierbei eine solche Ausgestaltung der zueinander korrespondierenden Flächen zu verstehen, dass diese bei Übereinanderbringung deckungsgleich sind. Mit anderen Worten bildet in bevorzugter Weise die eine Stirnfläche ein Negativ der anderen Stirnfläche.

Zwischen der Stirnfläche des Kolbens und der Gegenfläche, insbesondere der Stirnfläche des Kernrohrs, ist in der Ruhestellung folglich ein Hohlraum gebildet, der sich mit dem Verschieben des Kolbens aus seiner Ruhestellung in seine Arbeitsstellung, welche insbesondere eine Schneidstellung sein kann, verkleinert. Dieser Hohlraum wird als axialer Luftspalt bezeichnet, welcher sich in axialer Richtung des Kolbens erstreckt und mit einer Bewegung des Kolbens in seiner axialen Richtung entsprechend veränderlich ist. Es hat sich herausgestellt, dass die Größe dieses Luftspaltes und insbesondere der den Luftspalt begrenzenden Flächen in axialer Richtung, sprich die Stirnfläche und die Gegenfläche, von Bedeutung für die Wirkungsweise und Effizienz des elektromagnetischen Antriebs ist. Eine Krafteinwirkung auf den Kolben erfolgt unter anderem durch den magnetischen Fluss über diesen Luftspalt. Zur Erhöhung der Krafteinwirkung bei bestehender Geometrie ist deshalb die magnetische Flussdichte zu erhöhen und die entstehenden Verluste zu minimieren, welches in bevorzugter Weise durch die Vergrößerung des Luftspaltes im Zuge der konischen Ausgestaltung erreicht wird. Die von dem Magnetfeld erzeugte Kraft auf den Kolben kann dadurch erhöht werden.

Um in besonders vorteilhafter Weise die den Luftspalt in axialer Richtung begrenzenden Oberflächen der Bauteile im Bereich des Luftspalts zu erhöhen und zugleich eine gute Funktion des elektromagnetischen Antriebs bzw. der Schneidvorrichtung zu gewährleisten, sieht eine bevorzugte Ausgestaltung des elektromagnetischen Antriebs vor, dass der Winkel der konischen Stirnfläche des Kolbens und/oder ein Winkel der Gegenfläche, insbesondere einer korrespondierenden Stirnfläche des Kernrohrs, zur axialen Bewegungsachse des Kolbens von größer als 0° bis einschließlich 50°, bevorzugt von 10° bis einschließlich 45°, besonders bevorzugt von 15° bis einschließlich 40°, ganz besonders bevorzugt von 25° bis einschließlich 35° und insbesondere bevorzugt 30° beträgt.

Der Winkel der Stirnfläche des Kolbens bezieht sich dabei bevorzugt auf die Neigung bzw. den Winkel innerhalb des Materials des Kolbens und/oder der Oberfläche der Stirnfläche zur Mittellängsachse des Kolbens. Der Winkel der Gegenfläche, insbesondere der Stirnfläche des Kernrohrs, bezieht sich bevorzugt auf die Neigung bzw. den Winkel innerhalb des Luftspalts und/oder der Oberfläche der Gegenfläche bzw. der Stirnfläche zur Mittellängsachse des Kolbens bzw. zur Mittellängsachse des Kernrohrs. Entsprechend beträgt der Winkel der Gegenfläche, insbesondere im Material des Kernrohrs, bevorzugt 180° abzüglich des Winkels des Kolbens innerhalb des Materials. Weiterhin bevorzugt weist der konische Teil des Kolbens über die gesamte Stirnfläche einen gleichbleibenden Winkel auf, wobei jedoch auch grundsätzlich eine Gestaltung mit einem sich entlang der Stirnfläche ändernden Winkel und/oder eine in mehrere unterschiedliche Abschnitte getrennte Stirnfläche des Kolbens und/oder des stationären Bauteils denkbar ist.

Dabei sind die Stirnfläche des Kolbens und die Gegenfläche, vorzugsweise die Stirnflächen des Kolbens und des Kernrohrs, bevorzugt korrespondierend zueinander geformt und/oder verwinkelt, insbesondere derart, dass beim Schließen des axialen Luftspalts beide Stirnflächen vollständig miteinander in Anlage gelangen könnten. Darüber hinaus bevorzugt ist die betreffende Stirnfläche des Kolbens und/oder die Gegenfläche glatt bzw. eben gebildet.

Grundsätzlich können der Kolben und das Kernrohr aus einem beliebigen Material gebildet sein. Wegen der Hin-und Her Bewegung des Kolbens ist dieser vorzugsweise aus einem Material mit einer hohen magnetischen Permeabilität, mit hoher Sättigungsmagnetisierung und zudem mit einer niedrigen Koerzitivität gebildet, wodurch Hystereseverluste und erhöhte Rückstellkräfte vermieden werden können. Eine bevorzugte Ausgestaltung des elektromagnetischen Antriebs sieht daher vor, dass der Kolben und/oder das Kernrohr aus einem Material mit einem hohen magnetischen Sättigungsgrad, bevorzugt von mehr als 1,9 T und besonders bevorzugt von mehr als 2,0 T und/oder mit einer geringen Koerzitivfeldstärke, bevorzugt kleiner als 1300 A/m, besonders bevorzugt kleiner als 1200 A/m, ganz besonders bevorzugt kleiner als 800 A/m und insbesondere bevorzugt kleiner 700 A/m gebildet ist, wodurch in vorteilhafter Weise die im Material auftretenden Ummagnetisierungsverluste so gering wie möglich gehalten werden können. Des Weiteren führt die reduzierte Koerzitivfeldstärke dazu, dass eine erforderliche Rückstellkraft des weitestgehend geschlossenen Magnetkreises zur Wiederherstellung der Ausgangslage bzw. zur Einnahme der Ruhestellung reduziert werden kann.

Gemäß einer weiteren bevorzugten Ausführungsform weist der Kolben ein erstes Kolbensegment und ein zweites Kolbensegment auf, wobei das erste Kolbensegment außerhalb des Kernrohrs angeordnet ist, und wobei das zweite Kolbensegment an dem ersten Kolbensegment fixiert ist und mit einem freien Ende aus dem Solenoid herausragt, insbesondere sich vom ersten Kolbensegment durch das Kernrohr hindurch erstreckt, wobei das freie Ende des zweiten Kolbensegments ausgestaltet ist, den Schneidmesserträger zu tragen.

Bevorzugt ist das erste Kolbensegment aus einem Metall, wegen der hohen Sättigungsmagnetisierung bevorzugt aus einem Kohlenstoffstahl, besonders bevorzugt aus einem heißgerollten Kohlenstoffstahl gebildet und/oder weist einen Kohlenstoffanteil von kleiner als 1 %, bevorzugt von weniger als 0,5 %, besonders bevorzugt in einem Bereich von 0,05 % bis einschließlich 0,3 %, ganz besonders bevorzugt in einem Bereich von 0,1 % bis einschließlich 0,2 % auf. Je geringer der Kohlenstoffgehalt ist, desto weiter kann eine Reduzierung der Koerzitivfeldstärke erreicht werden, wobei sich herausgestellt hat, dass eine optimale Koerzitivfeldstärke bei dem besonders bevorzugten Kohlenstoffanteil von 0,1 % bis maximal 0,2 % erreicht werden kann.

Das Kernrohr ist an sich keinen hohen Kräften ausgesetzt. Jedoch wird durch die Reduzierung der Querschnittsfläche und damit eine Verdichtung des magnetischen Flusses vom Solenoid zum Kernrohr eine hohe Sättigungsmagnetisierung benötigt. Um Magnetisierungsverluste des elektromagnetischen Antriebs soweit wie möglich zu reduzieren, sind insbesondere bevorzugt sowohl das erste Kolbensegment als auch das Kernrohr aus einem gleichen Material gebildet. Als weiterer Vorteil können hierdurch Kosten dieser beiden Komponenten reduziert werden.

Weiterhin bevorzugt ist eine axiale Länge des ersten Kolbensegments derart gewählt, dass die axiale Länge gleich oder größer ist als eine einfache axiale Länge einer gegenüber dem ersten Kolbensegment liegenden exponierten Fläche des Solenoids, wobei die axiale Länge der exponierten Fläche des Solenoids größer als die axiale Länge des axialen Luftspalts in der Ruhestellung des Kolbens ist. Damit kann eine ausreichende Materialstärke für die Fixierung des zweiten Kolbensegments an dem ersten Kolbensegment einhergehend mit einer geringen Masse des ersten Kolbensegments bereitgestellt werden. Weiter bevorzugt ist die axiale Länge des ersten Kolbensegments gleich oder größer der Summe aus der einfachen axialen Länge der gegenüber dem ersten Kolbensegment liegenden exponierten Fläche des Solenoids und der axialen Länge des axialen Luftspalts in der Ruhestellung des Kolbens. Damit kann eine in einem orthogonalen Luftspalt zwischen Solenoid und Kolben wirkende magnetische Felddichte über den gesamten Bewegungsablauf des Kolbens konstant gehalten werden. Bevorzugt ist unter Kostengesichtsgründen ein Ende des zweiten Kolbensegments in einer, insbesondere axialen, Aufnahme des ersten Kolbensegments, beispielsweise durch, insbesondere axiales, Einpressen, fixiert. Alternative oder zusätzliche Fixierungsarten können ausgewählt sein, solange sichergestellt ist, dass das erste und zweite Kolbensegment in axialer Richtung gemeinsam bewegbar sind und weiter bevorzugt Aufschlagkräfte infolge des Schneidvorgangs aushalten bzw. diesen wiederstehen können.

Nach einer bevorzugten Ausführungsform ist das zweite Kolbensegment aus einem nicht magnetischen und/oder nicht magnetisierbaren Metall, insbesondere aus Aluminium oder Edelstahl, ausgebildet. Dadurch kann der Gefahr eines magnetischen Kurzschlusses effektiv entgegengewirkt werden. Die bevorzugte Ausgestaltung aus Aluminium oder Edelstahl wirkt sich weiter begünstigend entsprechend auf das Gewicht und die Stabilität des Kolbens aus.

Die vorstehende Aufgabe wird in alternativer oder zusätzlicher Weise dadurch gelöst, dass der Kolben wenigstens abschnittsweise hohl ausgebildet ist. Eine wenigstens abschnittsweise hohle Ausgestaltung des Kolbens ermöglicht neben einer effizienten Gewichtsreduzierung auch die Reduzierung von Ummagnetisierungsverlusten samt Ausbreitung von Wirbelströmen. Der elektromagnetische Antrieb, insbesondere der Kolben, kann dabei in bevorzugter Weise nach einer der vorstehend beschriebenen bevorzugten Ausführungsformen ausgestaltet sein. So können insbesondere das erste Kolbensegment und/oder das zweite Kolbensegment hohl ausgestaltet bzw. als Hohlprofil ausgebildet sein. Weiter bevorzugt kann der Kolben bzw. das erste Kolbensegment auf einer dem Schneidmesserträger abgewandten Rückseite ausgehöhlt sein. Das Maß der Aushöhlung kann dabei vorzugsweise derart gewählt sein, dass der Durchmesser der Aushöhlung so gestaltet ist, dass das die Aushöhlung umgebende Material des Kolbens bzw. des ersten Kolbensegments bei maximal erzeugter Schnittkraft des elektromagnetischen Antriebs außerhalb der magnetischen Sättigung liegt.

Weiterhin wird die zugrundeliegende Aufgabe in alternativer oder zusätzlicher Weise durch die vorliegende Erfindung dadurch gelöst, dass der Kolben in Wirkverbindung mit einem Rückstellelement zur Rückstellung des aus der Ruhestellung verschobenen Kolbens steht, wobei das Rückstellelement eine progressive und insbesondere nicht lineare Federkennlinie aufweist. Der elektromagnetische Antrieb kann dabei in bevorzugter Weise nach einer der vorstehend beschriebenen bevorzugten Ausführungsformen ausgestaltet sein.

In bevorzugter Weise greift an dem Kolben ein den Kolben in Richtung der Ruhestellung und/oder entgegen der Wirkrichtung des Magnetfeldes der Spule zur Beschleunigung des Kolbens aus der Ruhestellung rückstellendes Federelement an. Dabei ist das Federelement bevorzugt eine progressive Feder und besonders bevorzugt erhöht sich die Federkraft nicht-linear mit der zunehmenden Kompression bzw. Deformation der Feder. Weiterhin bevorzugt ist das Federelement eine Spiralfeder und/oder einen Kolbenabschnitt, insbesondere einen Abschnitt des zweiten Kolbensegments, umgebend angeordnet. Dabei kann in weiter bevorzugter Weise das Federelement in dem Kernrohr zumindest teilweise angeordnet sein bzw. in das Kernrohr zumindest teilweise hineinragen. In alternativ bevorzugter Weise kann ein zweites Kernrohr vorgesehen sein, welches weiter bevorzugt innerhalb des Solenoids oder innerhalb eines Solenoidkerns des Solenoids zur Führung eines das Kernrohr durchragenden Kolbenabschnitts angeordnet ist. In weiterer bevorzugter Ausführungsform kann das Solenoid, insbesondere der Solenoidkern, das Kernrohr oder das zweite Kernrohr, einen Anschlag für die Feder aufweisen oder ausbilden, um die Kompressionswirkung zu ermöglichen. Der Federanschlag kann innerhalb oder außerhalb des Kernrohrs bzw. des zweiten Kernrohrs vorgesehen sein.

Des Weiteren wird die zugrundeliegende Aufgabe in alternativer oder zusätzlicher Weise dadurch gelöst, dass der Kolben von einem relativ zum Kolben stationär angeordneten Solenoidkern umgeben ist, das entweder durch Puder-Spritzgießen hergestellt und/oder aus einem Weichferrit ausgebildet oder aus mehreren Lagen eines Elektrobleches, insbesondere aus einem Motorblech, ausgebildet ist. Der elektromagnetische Antrieb kann dabei in bevorzugter Weise nach einer der vorstehend beschriebenen bevorzugten Ausführungsformen ausgestaltet sein.

Der Solenoidkern ermöglicht einen verbesserten magnetischen Fluss innerhalb des Solenoids. Der Solenoidkern hat vorzugsweise eine ausreichend große Fläche, durch den der magnetische Fluss zum Kolben, und nach einer weiter bevorzugten Ausführungsform zusätzlich zum Kernrohr, gelangen kann. In bevorzugter Weise ist der Solenoidkern außerhalb der Spule angeordnet und weist einen die Spule in axialer Richtung überragenden Abschnitt auf, welcher unter Ausbildung eines orthogonalen Luftspaltes einem Kolbenabschnitt, weiter bevorzugt einem Abschnitt des ersten Kolbensegments und einem Abschnitt des Kernrohrs gegenüberliegt. Die magnetische Feldstärke kann dadurch vergleichsweise gering gehalten werden. Im Besonderen kann im Bereich der Übergänge zwischen Solenoidkern und Kolben, weiter bevorzugt sowohl zwischen Solenoidkern und erstem Kolbensegment als auch zwischen Solenoidkern und Kernrohr, eine niedrige magnetische Feldstärke erreicht werden. Der Kolben, insbesondere auch das Kernrohr, ist im Inneren des Solenoidkerns koaxial angeordnet.

Der Solenoidkern ist gemäß der bevorzugten Ausgestaltung keinen hohen Aufprallkräften ausgesetzt. Vorzugsweise wird der Solenoidkern mit einer grossen Querschnittsfläche bereitgestellt, über welche der magnetische Fluss geführt werden kann. Insbesondere sind in bevorzugter Weise die Übergänge zwischen Solenoidkern und Kolben, weiter bevorzugt sowohl zwischen Solenoidkern und erstem Kolbensegment als auch zwischen Solenoidkern und Kernrohr, derart flächig gestaltet, dass eine magnetische Sättigung im Bereich dieser Übergänge ausgeschlossen ist. Besonders vorteilhaft ist der Solenoidkern aus einem weichferritischen Material ausgebildet. Weichferrit trägt zur Optimierung der Wirkungsweise des elektromagnetischen Antriebs bei. Dabei ist insbesondere die Verwendung von Mn-Zn-Ferrit, Ni-Zn-Ferrit, Y-Fe-Granat oder dergleichen, vorteilhaft. Auch die Herstellung durch Puder-Spritzgießen ist vorteilhaft und ermöglicht besonders vorteilhafte magnetische Eigenschaften und einen besonders hohen Wirkungsgrad des elektromagnetischen Antriebs. Alternativ oder zusätzlich zu einer Ausgestaltung durch Puder-Spritzgießen, insbesondere dieser nachfolgend, kann ein Sinterprozess zum Verfestigen erfolgen, so dass die Ausgestaltung in einem Puderspritzgussteil resultiert, welches weiter bevorzugt anschließend gesintert ist. Durch die Ausgestaltung als, insbesondere gesintertes, Puderspritzgiessteil können zudem Herstellungskosten massgeblich gesenkt werden.

Bei einer alternativ bevorzugten Ausgestaltung des Solenoidkerns ist dieser aus mehreren Lagen eines Elektroblechs, besonders bevorzugt aus Motorblech und speziell bevorzugt aus Si-Stahlblech 3,2% oder Si-Stahlblech 6,5%, gebildet. Dadurch kann eine besonders hohe magnetische Permeabilität sowie magnetische Sättigung erreicht werden. Zudem können Wirbelströme durch die schichtweise Anordnung weitestgehend unterdrückt werden. Bevorzugt weisen alle Materiallagen eine identische Dicke auf und/oder sind aus einem zueinander identischen Material gebildet. Weiter bevorzugt weist der Solenoidkerns wenigstens 3, besonders bevorzugt wenigstens 5, ganz besonders bevorzugt wenigstens 10 und insbesondere bevorzugt wenigstens 15 Materiallagen auf.

Gemäß einer bevorzugten Ausführungsform der vorliegenden Erfindung ist eine magnetisch exponierte Fläche im orthogonalen Luftspalt zwischen Solenoidkern und Kolben, insbesondere eine jeweilige magnetisch exponierte Fläche sowohl zwischen Solenoidkern und erstem Kolbensegment als auch zwischen Solenoidkern und Kernrohr, bevorzugt größer oder gleich der magnetisch exponierten Fläche, insbesondere der Stirnfläche bzw. der Gegenfläche, im axialen Luftspalt, wobei die magnetisch exponierte Fläche des orthogonalen Luftspalts zwischen Solenoidkern und Kolben, insbesondere die magnetisch exponierte Fläche sowohl zwischen Solenoidkern und erstem Kolbensegment als auch die magnetisch exponierte Fläche zwischen Solenoidkern und Kernrohr, bevorzugt wenigstens um den Faktor 2, bevorzugt besonders um einen Faktor zwischen 2 und 6, ganz besonders bevorzugt um einen Faktor zwischen 3 und 5 und insbesondere bevorzugt um etwa den Faktor 4 größer ist als die Stirnfläche des Kolbens oder als die Gegenfläche im axialen Luftspalt. Als magnetisch exponierte Fläche wird dabei insbesondere die Fläche verstanden, auf die ein Magnetfeld des Solenoids einwirkt, insbesondere unmittelbar einwirkt, um eine Bewegung des Kolbens in axialer Richtung zu erreichen.

In bevorzugter Weise ist der Solenoidkern angeordnet, dem Kolben, insbesondere dem ersten Kolbensegment, und weiter bevorzugt dem Kernrohr, unter Ausbildung des orthogonalen zweiten Luftspalts unmittelbar gegenüberzuliegen. Unter unmittelbar ist hierbei ohne Zwischenlage irgendwelcher weiterer körperlicher Bauteile oder Elemente, die weder dem Kernrohr noch dem Kolben zugeordnet oder ein Bestandteil dieser sind.

Nach einer bevorzugten Weiterbildung des elektromagnetischen Antriebs ist der Kolben, insbesondere das zweite Kolbensegment, innerhalb des Kernrohres mit minimalen orthogonalen Abstand geführt angeordnet, um einen sich zwischen dem Kolben und einem das Kernrohr umgebenden Solenoidkern erstreckenden, zweiten, orthogonalen Luftspalt so klein wie möglich zu halten. Dadurch kann in vorteilhafter Weise die magnetische Feldstärke im axialen Luftspalt vergrößert werden, womit die Effizienz des elektromagnetischen Antriebs und damit eine Schneidwirkung der Schneidvorrichtung deutlich verbessert wird. Das Kernrohr ist bevorzugt als einstückiges und/oder von den restlichen Bauteilen des Solenoids eigenständiges Bauteil gebildet.

Weiterhin bevorzugt weist das Kernrohr einen hohlzylindrischen Abschnitt, besonders bevorzugt mit einem gleichbleibenden und an den Außendurchmesser des Kolbens bzw. eines geführten, das Kernrohr durchdringenden Abschnitts des Kolbens, insbesondere des zweiten Kolbensegments, angepassten Innendurchmesser auf.

Darüber hinaus ist eine Ausgestaltung des elektromagnetischen Antriebs bevorzugt, bei der das Solenoid ein Lagerelement, insbesondere ein einziges Lagerelement, zur Lagerung des Kolbens aufweist, wobei das Lagerelement besonders bevorzugt aus Polyetheretherketon (PEEK) gebildet ist, wodurch eine besonders gute lineare Führung mit einer geringen Gleitreibung erreicht werden kann. Ferner kann eine Beeinflussung der magnetischen Wirkung der Spule auf den Kolben zuverlässig vermieden werden kann.

Vorzugsweise weist das Material des Lagerelements bevorzugt einen geringen Reibungskoeffizienten auf. Das Lagerelement ist bevorzugt eine Lagerhülse und/oder ein Linearlagerelement. Ebenfalls bevorzugt umgibt das Lagerelement den Kolben, insbesondere einen Abschnitt des zweiten Kolbensegments, insbesondere im Kernrohr, besonders bevorzugt allseitig und/oder enganliegend. Das Lagerelement ist weiterhin bevorzugt in das Kernrohr eingepresst.

Eine Gestaltung des Lagerelements ist in alternativ bevorzugter Weise aus einem anderen Material wie beispielsweise aus Bronze, insbesondere aus Lagerbronze, Siliziumbronze oder Phosphorbronze, aus Messing, aus Kupfer oder aus einem anderen Metall, insbesondere einem anderen Buntmetall, denkbar.

Nach einer weiteren bevorzugten Ausgestaltung des elektromagnetischen Antriebs ist der Kolben derart ausgestaltet, dass ein Massenschwerpunkt des Kolbens, vorzugsweise einschließlich des Schneidmesserträgers, während der maximalmöglichen Verschiebung des Kolbens zwischen der Ruhestellung und der Arbeitsstellung, welche die Endstellung wie die Schneidstellung oder eine dazwischenliegende Stellung sein kann, innerhalb des Kernrohres, insbesondere innerhalb des Lagerelements verbleibt. Dadurch kann in einfacher Weise eine besonders stabile und verwinklungsfreie Lagerung erreicht werden kann, was zum einen unmittelbar das Schneidergebnis durch einen definierten Winkel des Auftreffens des Schneidmessers verbessern kann und zum anderen den radialen bzw. orthogonalen Luftspalt während der gesamten Bewegung des Kolbens zwischen der Ruhestellung und der Arbeitsstellung konstant und dabei so klein wie möglich hält, wodurch die magnetische Feldstärke in dem für den Antrieb des Kolbens wichtigen, axialen Luftspalt so groß wie möglich gehalten werden kann.

Nach einem weiteren Aspekt der vorliegenden Erfindung wird eine Schneidvorrichtung für eine Textilmaschine zum Durchtrennen eines Fadens bereitgestellt, welche einen elektromagnetischen Antrieb nach wenigstens einer der vorstehend bevorzugten Ausführungsformen sowie einer mittels des elektromagnetischen Antriebs zwischen einer Ruhestellung und einer Arbeitsstellung wie einer Schneidstellung bewegbaren Schneidmesserträger mit einem Schneidmesser umfasst.

Eine Schneidvorrichtung im Sinne der vorliegenden Erfindung ist eine Vorrichtung, die mittels eines elektromagnetischen Antriebs ein Schneidmesser derart bewegen kann, dass ein in oder an der Schneidvorrichtung angeordneter und insbesondere ein mit hoher Geschwindigkeit vorbeilaufender Faden durchtrennt werden kann. Dabei ist die Schneidvorrichtung und/oder ein Garnreiniger mit einer solchen Schneidvorrichtung bevorzugt eine autonome bzw. eigenständige Baueinheit und/oder zur Anordnung an einer Textilmaschine vorgesehen.

Die Schneidkraft einer Schneidvorrichtung ergibt sich direkt proportional zum Impuls der bewegenden Masse. Die bewegende Masse ist nach einer bevorzugten Ausführungsform die Gesamtmasse des Kolbens und des Schneidmesserträgers sowie des vom Schneidmesserträger getragenen Schneidmessers. Bei Beschleunigung aus dem Stillstand ist der der bewegenden Masse zugeführte Impuls unabhängig von der bewegenden Masse, sondern lediglich abhängig von dem zeitlichen Integral der auf der bewegenden Masse resultierenden Krafteinwirkung. Zur Erhöhung des Impulses ist daher in bevorzugter Weise die Geschwindigkeit zu erhöhen. Dies kann vorzugsweise dadurch erreicht werden, dass die Masse des bewegten Systems reduziert wird. Die auf den Kolben resultierenden Krafteinwirkung ist ferner direkt von den Eigenschaften und dem Wirkungsgrad des Solenoids abhängig, sodass eine Verbesserung der Effizienz und Wirkungsweise des Solenoids zu einer Verbesserung der Schneidkraft und somit des Schneidergebnisses führt. Entsprechend ist eine hohe energetische Effizienz erwünscht. Zur Erhöhung der auf dem Kolben samt Schneidmesser resultierenden Krafteinwirkung ist vorzugsweise der magnetische Fluss im axialen Luftspalt zwischen Kolben und Solenoidkern zu erhöhen, die auftretenden Verluste im bewegtem- sowie ruhenden System zu minimieren und zudem die notwendigen Rückstellkräfte, welche das bewegte System nach erfolgter Schnitt zurückstellen, gleichfalls zu minimieren.

Der Kolben, die Spule und der Solenoidkern sind bevorzugt Bauteile des Solenoids. Dabei ist der Kolben von diesen drei Bauteilen das einzige bewegliche und insbesondere linear verschiebliche Bauteil. Entsprechend ist der Kolben innerhalb der Schneidvorrichtung und insbesondere innerhalb des Solenoids, gegebenenfalls neben dem Schneidmesserträger, das Bauteil, das die größten Aufprallkräfte aushalten muss und während des Betriebs mit hohen Geschwindigkeiten bewegt wird, sodass starke Kräfte auf dieses Bauteil wirken. Der Antrieb des Schneidmesserträgers bzw. des Schneidmessers erfolgt durch den Solenoid durch Verschieben des Kolbens zwischen der Ruhestellung und der Schneidstellung entlang einer linearen, insbesondere geraden Bewegungsbahn, die durch den Kolben bzw. seine Bewegung vorgegeben wird. Bevorzugt weist der Kolben im gesamten innerhalb des Solenoids angeordneten Abschnitt und ganz besonders bevorzugt insgesamt eine rotationssymmetrische Form auf.

Um ein Schneidmesser mittels des Kolbens bewegen zu können, ist in bevorzugter Weise an einem Ende des Kolbens und/oder in einem Bereich des Kolbens außerhalb des Solenoids der Schneidmesserträger angeordnet. Der Schneidmesserträger ist ein am Kolben fixiertes Bauteil, dessen Masse durch zumindest teilweise bevorzugte Gestaltung als Hohlprofil weiter reduziert werden kann.

Der Schneidmesserträger ist grundsätzlich zur Aufnahme eines Schneidmessers gebildet. Dabei ist der Schneidmesserträger bevorzugt zur austauschbaren Aufnahme eines Schneidmessers vorgesehen. Weiterhin bevorzugt sichert der Schneidmesserträger das Schneidmesser gegen ein Verschieben in axialer und/oder radialer Richtung bei der Bewegung des Kolbens und des Schneidmesserträgers und/oder gegen ein Verwickeln des Schneidmessers relativ zur axialen Richtung der Kolbenbewegung. Der Schneidmesserträger ist bevorzugt derart gebildet, dass das Schneidmesser linear in axialer Richtung oder koaxial zur Bewegungsrichtung des Kolbens zwischen der Ruhestellung und der Schneidstellung verschoben wird.

Das Schneidmesser kann grundsätzlich beliebig gestaltet sein und dabei eine oder mehrere Schneiden aufweisen. Dabei ist das Schneidmesser mittelbar oder unmittelbar an dem linear verschieblichen Kolben und insbesondere bevorzugt unmittelbar am Schneidmesserträger angeordnet und schneidet dabei bevorzugt durch eine Schneidbewegung in axialer Richtung des Kolbens. Weiterhin bevorzugt wirkt das Schneidmesser zum Durchtrennen des Fadens mit einer Gegenfläche, besonders bevorzugt einer feststehenden bzw. stationären Gegenfläche und ganz besonders bevorzugt in bekannter Weise mit einem Amboss zusammen.

Nach einer bevorzugten Ausführungsform ist die Schneidvorrichtung derart ausgestaltet, dass die einander gegenüberliegende Stirnfläche und Gegenfläche des elektromagnetischen Antriebs nach einer der vorstehend beschriebenen bevorzugten Ausführungsformen in der Schneidstellung nicht zur Anlage gelangen bzw. sich nicht berühren. Dadurch können diese Flächen mit geringerer Härte ausgebildet sein, insbesondere brauchen diese keinem Härteprozess unterzogen werden. Ferner kann die Gefahr eines Verklebens des Kolbens an der Gegenfläche und folglich einer verzögerten oder fehlenden Rückstellung des Kolbens vermieden werden. Nach einer bevorzugten Ausführungsform kann die gegenseitige Anlage dadurch verhindert werden, dass der Hub der Schneidvorrichtung kleiner als die axiale Länge des axialen Luftspaltes vorgesehen wird.

Schließlich betrifft die Erfindung einen Garnreiniger für eine Arbeitsstelle einer Textilmaschine mit einem elektromagnetischen Antrieb und/oder mit einer Schneidvorrichtung nach einem der vorstehend bevorzugten Ausführungsformen sowie wenigstens einer Sensorvorrichtung zum Erfassen wenigstens der Anwesenheit oder Abwesenheit eines Fadens und/oder zum Erfassen eines Garnfehlers.

Die Textilmaschine kann grundsätzlich eine beliebige, wenigstens einen Faden erzeugende oder verarbeitende Vorrichtung sein, wobei die Textilmaschine bevorzugt zahlreiche Arbeitsstellen, insbesondere nebeneinander aufgereihte Arbeitsstellen aufweist. Besonders bevorzugt ist die Textilmaschine eine Spinnmaschine oder eine Auflaufspulen herstellende oder umspulende Textilmaschine, wie insbesondere eine Rotorspinnmaschine, eine Luftspinnmaschine oder eine Spulmaschine.

Der Garnreiniger kann grundsätzlich beliebig gebildet sein und dabei zur Überwachung und/oder zur Bearbeitung des vorbeigeführten Fadens, insbesondere zum Herausschneiden fehlerhafter Abschnitte, vorgesehen sein. Entsprechend weist der Garnreiniger bevorzugt zwischen einem Fadeneingang und einem Fadenausgang und dabei insbesondere in einem Fadenführungskanal wenigstens eine Einheit zum Überwachen und/oder zum Bearbeiten des Fadens auf. Insbesondere weist der Garnreiniger eine Schneidvorrichtung nach einer der bevorzugten Ausführungsformen auf, um detektierte Garndefekte und/oder Garnfehler auszureinigen, d. h., einen fehlerhaften Abschnitt abzutrennen.

Die vorstehend beschriebenen, insbesondere geometrischen Gestaltungen der Komponenten nach einer der bevorzugten Ausführungsformen der vorliegenden Erfindung kombiniert mit einer geeigneten Materialwahl führen zu einer weitestgehend Vermeidung von Wirbelstrom- und Ummagnetisierungsverlusten, die bei der dynamischen Umsetzung der zugeführten elektrischen Energie in Bewegungsenergie entstehen. Des Weiteren können magnetische Einschränkungen wie Sättigung und Restmagnetismus (Koerzitivität) durch die Wahl der verwendeten Materialien und Geometrien verbessert werden. Eine verbesserte Beschleunigung des Kolbens kann durch Reduzierung der Masse erreicht werden, wodurch letztendlich die Schnittleistung erhöht werden kann. Ausserdem kann durch Reduzierung der Koerzitivität die benötigte Rückstellkraft insbesondere am Ende eines Schneidvorgangs zur Rückstellung des Kolbens reduziert werden. Zudem kann durch Reduzierung der bewegten Masse die erforderliche Rückstellkraft weiter herabgesetzt werden. Zur weiteren Optimierung des Antriebes ist das als Rückstellelement verwendete Federelement in bevorzugter Weise so gestaltet, dass die während der Beschleunigungsphase die der Beschleunigung entgegenwirkenden Federkraft minimiert wird.

Die vorliegende Erfindung ist nicht auf die vorstehend beschriebenen einzelnen Ausführungsformen beschränkt. Es können durchaus einzelne oder mehrere Ausführungsformen miteinander kombiniert werden, wodurch eine weitere bevorzugte Ausführungsform erreicht werden kann.

Ein Ausführungsbeispiel eines elektromagnetischen Antriebs für eine Schneidvorrichtung einer Textilmaschine wird nachstehend mit Bezug auf die Zeichnungen näher erläutert. In den Figuren zeigen:
- Fig. 1: eine schematische Ansicht der Oberseite eines elektromagnetischen Antriebs für eine Schneidvorrichtung einer Textilmaschine und
- Fig. 2: eine Schnittansicht des in Figur 1 dargestellten elektromagnetischen Antriebs.

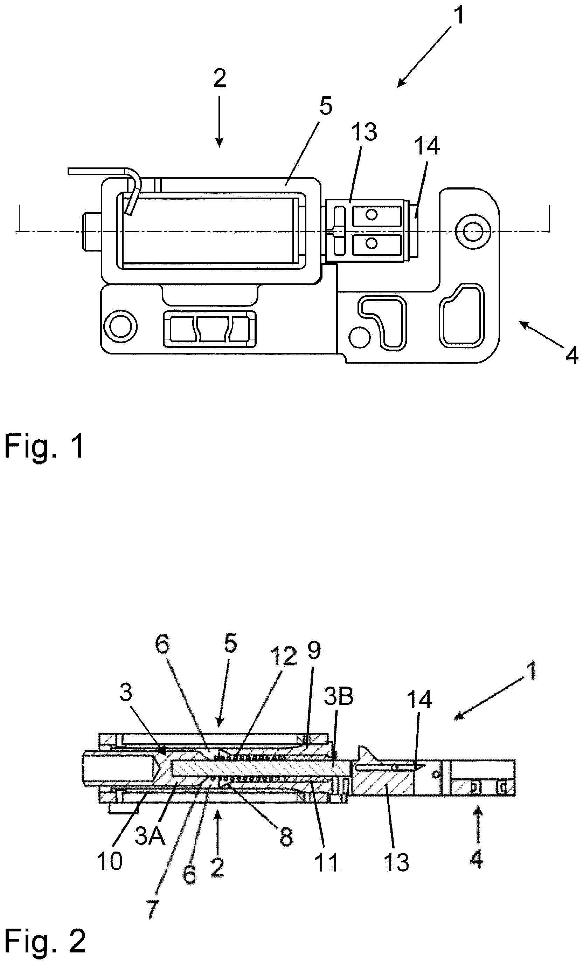

Ein in Figur 1 dargestellter elektromagnetischer Antrieb 1 ist für eine Schneidvorrichtung einer Fadenspulen herstellenden Textilmaschine vorgesehen und weist eine Schneidmesseraufnahme 4 zur Aufnahme der Schneidvorrichtung an einem Garnreiniger auf. Mittels eines Schneidmessers 14, welches in einem Schneidmesserträger 13 integriert ist, kann ein sich schnell entlang seiner Mittellängsachse bewegter Faden geschnitten bzw. durchtrennt werden, beispielsweise bei einer Erkennung eines Defekts. Aufgrund der hohen Fadenlaufgeschwindigkeit muss der Schneidvorgang innerhalb weniger Millisekunden erfolgen, so dass ein besonders schneller Antrieb des Schneidmessers 14 benötigt wird. Zudem ist zum sauberen Trennen des Fadens eine gewisse Schneidkraft und zugleich eine hohe Präzision erforderlich.

Um dies zu ermöglichen, weist der elektromagnetische Antrieb 1 ein Solenoid 2 auf. Im Inneren eines Solenoidkerns 5 ist dabei ein Kolben 3 linear verschieblich angeordnet. Der Kolben 3 ist aus einem ersten Kolbensegment 3A und einem zweiten Kolbensegment 3B ausgestaltet, wobei ein freies Ende des zweiten Kolbensegments 3B in eine Aufnahme des ersten Kolbensegments 3A eingepresst und somit fixiert ist.

Der Kolben 3 ist abschnittsweise von einer in den Figuren nicht dargestellten Spule umgeben. Wird die Spule aktiviert, so baut sich ein Magnetfeld auf und der Kolben 3 wird in Richtung einer Schneidstellung verschoben. Zur präzisen und zugleich möglichst reibungsarmen Lagerung des Kolbens 3 am Solenoidkern 5 ist der Kolben 3 innerhalb eines Kernrohres 9 angeordnet, in das zudem ein Lagerelement 11 aus Polyetheretherketon eingepresst ist, das den Kolben 3 linear führt und ein Verwinkeln verhindert.

An dem Kolben 3, insbesondere an dem weiteren freien Ende des zweiten Kolbensegments 3B, ist der Schneidmesserträger 13 lösbar angebunden.

Um eine besonders gute magnetische Wechselwirkung zwischen dem stationären Kernrohr 9 und dem Kolben 3 zu erreichen, sind die Stirnflächen 7, 8 sowohl des Kolbens 3 bzw. des ersten Kolbensegments 3A als auch des Kernrohrs 9 konisch gebildet. Die magnetische Wechselwirkung zwischen stationären Kernrohr 9 und Kolben 3 erfolgt dabei maßgeblich innerhalb eines axialen Luftspaltes 6, der sich zwischen der gegenüber der Mittellängsachse des Kolbens 3 verwinkelten Stirnfläche 7 des Kolbens 3 und der dazu korrespondierenden, ebenso verwinkelten Stirnfläche 8 des Kernrohrs 9 erstreckt. Der axiale Luftspalt 6 verändert dabei sein Volumen und seine Länge entlang der Mittellängsachse bzw. der Bewegungsrichtung des Kolbens 3 mit der Verschiebung des Kolbens 3 von einer Ruhestellung in eine Schneidstellung, in welcher der Faden durchtrennt wird.

Die beiden Stirnflächen 7, 8 weisen dabei eine ebene und zur Mittellängsachse des Kolbens 3 um etwa 30° verwinkelte Oberfläche auf, wodurch die Oberflächen gegenüber einer Anordnung in einem Winkel von 90° deutlich vergrößert werden. Auf diese Weise kann eine deutliche Optimierung der magnetischen Wechselwirkung erreicht werden. Um diese Wechselwirkung weiter zu optimieren, sind das Lagerelement 11, der Kolben 3 und der Solenoidkern 5 derart gebildet, dass der orthogonale Luftspalt 10 zwischen dem Kolben 3 und dem Solenoidkern 5, der den Kolben 3 um den vollen Umfang umgibt und sein Volumen mit einer Verschiebung des Kolbens 3 im Wesentlichen nicht ändert, so klein wie möglich ist.

Wie vorstehend beschrieben, ist das zweite Kolbensegment 3B fixierend in das erste Kolbensegment 3A eingefasst, insbesondere eingepresst. Das zweite Kolbensegment 3B wird durch das Lagerelement 11 in axialer Richtung geführt. Weiterhin ist das zweite Kolbensegment 3B abschnittsweise hohl gebildet, oder zumindest abschnittweise als Hohlprofil ausgeführt, was zur weiteren Reduzierung der bewegten Masse beiträgt, wodurch eine bessere Beschleunigung der bewegten Masse erreicht wird, was wiederrum zu einer höheren Schneidkraft führt. Zur Vermeidung von magnetischen Kurzschlüssen ist das zweite Kolbensegment 3B aus nicht magnetischen und / oder nicht magnetisierbarem Material, insbesondere aus Aluminium oder nicht magnetischem Edelstahl gefertigt. Simultan dazu wird durch die Aushöhlung des ersten Kolbensegments 3A auf der dem zweiten Kolbensegment 3B abgewandten Seite des Kolbens 3 die dort entstehenden Wirbelstrom- und Magnetisierungsbverluste reduziert.

Um ein sicheres und zügiges Rückstellen des Kolbens 3 aus der Schneidstellung in die Ruhestellung zu ermöglichen, ist eine progressive Spiralfeder 12 das zweite Kolbensegment 3B umgebend angeordnet, welche beim Verschieben des Kolbens 3 in die Schneidstellung zunehmend gespannt wird. Sobald die Spule deaktiviert wird, drückt die Spiralfeder 12 den Kolben 3 zurück in die Ruhestellung, wobei ein Bewegungszyklus einer elektromagnetischen Verlagerung des Kolbens 3 aus der Ruhestellung in die Schneidstellung und eine federkraftgetriebene Rückverlagerung des Kolbens 3 in die Ruhestellung bevorzugt innerhalb von 10 ms bis maximal 15 ms erfolgt. Die Spiralfeder 12 ist dabei zwischen der Stirnfläche 7 des Kolbens 3 und eines in dem Kernrohr 9 vorgesehenen Federanschlags zur jeweiligen Anlage wenigstens im Zuge der Verschiebung des Kolbens 3 von der Ruhestellung in die Schneidstellung angeordnet. In einer weiteren bevorzugten Anordnung wird die Spiralfeder 12 zwischen der Stirnfläche 7 des Kolbens 3 und einer Stirnfläche des Lagerelements 11 gefasst.

Um die magnetische Wechselwirkung weiter zu optimieren, sind das erste Kolbensegment 3A und das Kernrohr 9 aus einem Material mit einem hohen magnetischen Sättigungsgrad von mehr als 1,9 T und mit einer geringen Koerzitivfeldstärke kleiner als 800 A/m gebildet. Als Material des ersten Kolbensegments 3A und des Kernrohrs 9 wird bei dieser Ausführung des elektromagnetischen Antriebs 1, heißgerollter Kohlenstoffstahl mit einem geringen Kohlenstoffanteil von 0,1 % bis 0,2 % verwendet.

Der Solenoidkern 5 ist zudem aus mehreren miteinander verbundenen Lagen aus Elektroblech und insbesondere aus Motorenblech gebildet. In einer weiteren bevorzugten Anordnung besteht der Solenoidkern 5 aus einem Weichferrit, insbesondere aus Mn-Zn-Ferrit, Ni-Zn-Ferrit, Y-Fe-Granat oder dergleichen, wobei eine Herstellung durch Puder-Spritzgießen ist dabei besonders vorteilhaft ist. Diese Maßnahmen helfen unter anderem, Wirbelströme und deren negative Einflüsse auf eine zügige Beschleunigung des Kolbens 3 soweit zu reduzieren, dass kein maßgeblicher Einfluss mehr vorliegt.

### Bezugszeichenliste

- 1: Elektromagnetischer Antrieb
- 2: Solenoid
- 3: Kolben
- 3A: erstes Kolbensegment
- 3B: zweites Kolbensegment
- 4: Schneidmesseraufnahme
- 5: Solenoidkern
- 6: axialer Luftspalt
- 7: Stirnfläche des Kolbens
- 8: Gegenfläche bzw. Stirnfläche des Kernrohrs
- 9: Kernrohr
- 10: orthogonaler Luftspalt
- 11: Lagerelement
- 12: Rückstellelement / Spiralfeder
- 13: Schneidmesserträger
- 14: Schneidmesser

## Patentansprüche

1. Elektromagnetischer Antrieb (1) für eine Schneidvorrichtung einer Textilmaschine zum Durchtrennen eines Fadens mittels eines Solenoids (2), mit
- einem innerhalb des Solenoids (2) linear verschieblich geführten Kolben (3) zum Antrieb eines Schneidmesserträgers (13), wobei der Kolben (3) zwischen einer Ruhestellung und einer Arbeitsstellung linear verschieblich ist,
- einer Spule zum Erzeugen eines den Kolben (3) antreibenden Magnetfeldes sowie
- einem in Abhängigkeit der Kolbenverschiebung veränderlichen axialen Luftspalt (6) zwischen einer Stirnfläche (7) des Kolbens (3) und einer Gegenfläche eines relativ zum Kolben (3) stationär angeordneten Bauteils des Solenoids (2),
**dadurch gekennzeichnet, dass**
- der Kolben (3), insbesondere mittels eines Lagerelements (11), abschnittsweise in einem von dem Solenoid (2) umfassten Kernrohr (9) geführt ist, wobei das Kernrohr (9) durch das relativ zum Kolben (3) stationär angeordnete Bauteil ausgebildet ist, und wobei sich der axiale Luftspalt (6) zwischen der, insbesondere konisch ausgeformten, Stirnfläche (7) des Kolbens (3) und einer durch die Gegenfläche ausgeformten, insbesondere zur konischen Stirnfläche (7) des Kolbens (3) korrespondierend ausgebildeten, Stirnfläche (8) des Kernrohrs (9) erstreckt, und/oder
- der Kolben (3) wenigstens abschnittsweise hohl ausgebildet ist, und/oder
- der Kolben (3) in Wirkverbindung mit einem Rückstellelement (12) zur Rückstellung des aus der Ruhestellung verschobenen Kolbens (3) steht, wobei das Rückstellelement (12) eine progressive und insbesondere nicht lineare Federkennlinie aufweist, und/oder
- der Kolben (3) von einem relativ zum Kolben (3) stationär angeordneten Solenoidkern (5) umgeben ist, das entweder durch Puder-Spritzgießen hergestellt und/oder aus einem Weichferrit ausgebildet oder aus mehreren Lagen eines Elektrobleches, insbesondere aus einem Motorblech, ausgebildet ist.

2. Elektromagnetischer Antrieb (1) nach Anspruch 1, **dadurch gekennzeichnet, dass** der Kolben (3) ein erstes Kolbensegment (3A) und ein zweites Kolbensegment (3B) aufweist, wobei das erste Kolbensegment (3A) außerhalb des Kernrohrs (9) angeordnet ist, und wobei das zweite Kolbensegment (3B) an dem ersten Kolbensegment (3A) fixiert ist und mit einem freien Ende aus dem Solenoid (2) herausragt, insbesondere sich vom ersten Kolbensegment (3A) durch das Kernrohr (9) hindurch erstreckt, wobei das freie Ende des zweiten Kolbensegments (3B) ausgestaltet ist, den Schneidmesserträger (13) zu tragen.

3. Elektromagnetischer Antrieb (1) nach Anspruch 2, **dadurch gekennzeichnet, dass** das erste Kolbensegment (3A) eine axiale Länge aufweist, welche gleich oder größer als eine einfache axiale Länge einer gegenüber dem ersten Kolbensegment (3A) liegenden exponierten Fläche des Solenoids (2) ist, wobei die axiale Länge der exponierten Fläche des Solenoids (2) größer als die axiale Länge des axialen Luftspalts (6) in der Ruhestellung des Kolbens (3) ist.

4. Elektromagnetischer Antrieb (1) nach Anspruch 2 oder 3, **dadurch gekennzeichnet, dass** das erste Kolbensegment (3A) und/oder das Kernrohr (9) aus einem heißgerollten Kohlenstoffstahl gebildet ist und/oder einen Kohlenstoffanteil von weniger als 1 %, insbesondere von weniger als 0,5% oder in einem Bereich von 0,1 % bis 0,2 % aufweist.

5. Elektromagnetischer Antrieb (1) nach einem der Ansprüche 2 bis 4, **dadurch gekennzeichnet, dass** das zweite Kolbensegment (3B) aus einem nicht magnetischen und/oder nicht magnetisierbaren Metall, insbesondere aus Aluminium oder Edelstahl, ausgebildet ist.

6. Elektromagnetischer Antrieb (1) nach einem der vorhergehenden Ansprüche, **dadurch gekennzeichnet, dass** der Winkel der konischen Stirnfläche (7) des Kolbens (3) und/oder ein Winkel der korrespondierenden Stirnfläche (8) des Kernrohrs (9) zur axialen Bewegungsachse des Kolbens (3) zwischen 15° und 40° beträgt.

7. Elektromagnetischer Antrieb (1) nach einem der vorhergehenden Ansprüche, **dadurch gekennzeichnet, dass** der Kolben (3) innerhalb des Kernrohres (9) mit minimalen orthogonalen Abstand geführt angeordnet ist, um einen sich zwischen dem Kolben (3) und einem das Kernrohr (9) umgebenden Solenoidkern (5) erstreckenden, zweiten, orthogonalen Luftspalt (10) so klein wie möglich zu halten.

8. Elektromagnetischer Antrieb (1) nach einem der vorhergehenden Ansprüche, **gekennzeichnet durch** ein einziges, in dem Kernrohr (9) angeordnetes Lagerelement (11) zur Lagerung des Kolbens (3), wobei das Lagerelement (11) insbesondere aus Polyetheretherketon gebildet ist.

9. Elektromagnetischer Antrieb (1) nach einem der vorhergehenden Ansprüche, **dadurch gekennzeichnet, dass** der Massenschwerpunkt des Kolbens (3) während der Verschiebung des Kolbens (3) zwischen Ruhestellung und Schneidstellung innerhalb des Kernrohrs (9), insbesondere innerhalb eines in dem Kernrohr (9) angeordneten Lagerelements (11), verbleibt.

10. Elektromagnetischer Antrieb (1) nach einem der vorhergehenden Ansprüche, **dadurch gekennzeichnet, dass** eine magnetisch exponierte Fläche in einem orthogonalen Luftspalt (10) zwischen einem Solenoidkern (5) des Solenoids (2) und dem Kolben (3) gleich oder größer einer magnetisch exponierten Fläche im axialen Luftspalt (6) ist, wobei die magnetisch exponierte Fläche des orthogonalen Luftspalts (10) bevorzugt um einen Faktor von 3 bis 5 größer als die magnetisch exponierte Fläche im axialen Luftspalt (6) ist.

11. Elektromagnetischer Antrieb (1) nach einem der vorhergehenden Ansprüche, **dadurch gekennzeichnet, dass** der Kolben (3) und/oder das Kernrohr (9) aus einem Material mit einem magnetischen Sättigungsgrad von mehr als 1,9 T und/oder mit einer Koerzitivfeldstärke kleiner als 1.300 A/m gebildet ist.

12. Schneidvorrichtung für eine Textilmaschine zum Durchtrennen eines Fadens, mit
- einem elektromagnetischen Antrieb (1) nach einem der vorhergehenden Ansprüche, sowie
- einem mittels des elektromagnetischen Antriebs (1) zwischen einer Ruhestellung und einer Schneidstellung bewegbaren Schneidmesserträger (13) mit einem Schneidmesser (14).

13. Garnreiniger für eine Arbeitsstelle einer Textilmaschine, mit
- einem elektromagnetischen Antrieb (1) nach einem der vorhergehenden Ansprüche 1 bis 11, sowie
- wenigstens einer Sensorvorrichtung zum Erfassen wenigstens der Anwesenheit oder Abwesenheit eines Fadens und/oder zum Erfassen eines Garnfehlers.
